# EUROPEAN PATENT APPLICATION

(11) **EP 1 431 977 A2**
(43) Date of publication of application: **23.06.2004**
(21) Application number: 03078829.3
(22) Date of filing: 08.12.2003
(51) Int. Cl.: G11B 27/00

(54) **Synchronization of music and images in a digital multimedia device system**

(30) Priority: 20.12.2002 US 326456
(71) Applicant: EASTMAN KODAK COMPANY, Rochester, New York 14650 (US)
(72) Inventor: Ainsworth, Heather C., c/o Eastman Kodak Company, Rochester New York 14650-2201 (US)
(74) Representative: Haile, Helen Cynthia

(57) **Abstract**

A method and computer software program for automatically associating a collection of images with selected audio. The method includes providing a collection of digital still images, a collection of audio files, and selecting a first criterion for the automatic selection of audio files from the collections of audio files and/or a second criterion for the automatic selection of digital images from the collections of digital still images. The method further includes automatically analyzing the selected digital images and/or the selected audio files for creating a presentation of the selected digital images and selected audio files in the multimedia show in accordance with the first and second criteria.

## Description

The present invention relates to devices having music and image playback capabilities. Specifically, the present invention concerns detection of a predominate characteristic(s) of audio (and/ or image) files and the use of these characteristics to automate provision of image files to accompany said audio file (or audio files to accompany said image files).

Computer technology and software design have led to various methods and tools for creating "slideshows" for display of images accompanied by audio. Most of these systems require that the user specifically select *both* the images *and* the audio for inclusion in the show (i.e. Products currently commercially available include Shockwave.com's PhotoJam, NoizePlay's Photoshow product, Totally Hip Inc's LiveSideShow2 software, Macromedia Director™ and Adobe Premier™.) US 6,078,005 patent discloses the ability to construct multimedia shows if driven by music selection and given a set of user indicated images. The '005 patent also discloses automated selection and application of visual effects (i.e. creative criterion/criteria), but *no* capability to intelligently choose images to pair with the audio or vice versa.

A few prior systems will allow users to select *only* images, and the system will randomly assign audio to the show (i.e. NoizePlay's Photojam, currently commercially available.)

Jungleib Corp Patent 5,286,908 discloses a system that creates *new* music or images based on pre-existing audio or visual media. However, it cannot match pre-existing audio and images.

Other systems provide only image-based slideshow capabilities, without associated audio. Many of the systems targeting display of consumer images on televisions offer only image data, without specifically associated audio. Visioneer's PhotoPort TV 100 entered the market in 2002, and Kodak's Picture Channel related to image distribution and sharing via set top box.

Unfortunately, no current system can "intelligently" author multimedia shows to provide images that are appropriate to user-selected audio, or conversely, to select audio that is appropriate for the user-selected images.

Current practice requires heavy user input for each multimedia show the system authors. No system can analyze the content of the images selected by the user, and automatically select audio appropriate to the content or metadata of the images. No system can analyze the content of the audio selected by the user, and automatically select images from the user's collection that are appropriate to the audio.

In addition, current systems cannot recall a user's preferred creative criterion/criteria for the show, preferred music genres, or determine a user's preferred image criterion/criteria. Current systems cannot use such data collected from one authoring experience to intelligently author the following show.

What is needed is an improved method that can collect data about an image collection and/ or audio collection, collect data about user preferences, and intelligently author multimedia shows tailored to the content of the media and to the user's preferences but with little direct user input... thus allowing a user to showcase her visual and audio creativity without requiring much time, effort or specialized skill.

In accordance with one aspect of the present invention there is provided a method for automatically associating images with audio for presentation in a multimedia show, comprising the steps of:
a. providing a collection of digital still images;
b. providing a collection of audio files;
c. selecting a criterion for the automatic selection of images from the collections of digital still images; and
d. automatically analyzing the audio files for selecting audio files to be presented with the selected digital images in the multimedia show

In accordance with another aspect of the present invention there is provided a software program for use in a computer that when loaded on to the computer the program will cause the computer to do the following steps:
a. provide a collection of digital still images;
b. provide a collection of audio files;
c. allow selection of a criterion for the automatic selection of images from the collections of digital still images; and
d. automatically analyzing the audio files for selecting audio files to be presented with the selected digital images in the multimedia show

In accordance with yet another aspect of the present invention there is provided a method for automatically associating a of images with audio for presentation in a multimedia show, comprising the steps of:
a. providing a collection of digital still images;
b. providing a collection of audio files;
c. selecting a criterion for the automatic selection of audio files from the collections of audio files; and
d. automatically analyzing the digital image for selecting digital images to be presented with the selected audio files in a show

In accordance with yet another aspect of the present invention there is provided a computer software program for use in a computer that when loaded on to the computer the program will cause the computer to do the following steps:
a. provide a collection of digital still images;
b. provide a collection of audio files;
c. allow selection of a criterion for the automatic selection of audio files from the collections of audio files; and
d. automatically analyzing the digital image for selecting digital images to be presented with the selected audio files in a show

In accordance with still yet another aspect of the present invention there is provided a method for automatically associating a collection of images with selected audio, comprising the steps of:
a. providing a collection of digital still images;
b. providing a collection of audio files;
c. selecting a first criterion for the automatic selection of audio files from the collections of audio files;
d. selecting a second criterion for the automatic selection of digital images from the collections of digital still images; and
e. automatically analyzing the selected digital images and the selected audio files for creating a presentation of the selected digital images and selected audio files in the multimedia show in accordance with the first and second criteria.

In accordance with another aspect of the present invention there is provided a computer software program for use in a computer that when loaded on to the computer the program will cause the computer to do the following steps:
a. providing a collection of digital still images;
b. providing a collection of audio files;
c. selecting a first criterion for the automatic selection of audio files from the collections of audio files;
d. selecting a second criterion for the automatic selection of digital images from the collections of digital still images; and
e. automatically analyzing the selected digital images and the selected audio files for creating a presentation of the selected digital images and selected audio files in the multimedia show in accordance with the first and second criteria.

These and other aspects, objects, features and advantages of the present invention will be more clearly understood and appreciated from a review of the following detailed description of the preferred embodiments and appended claims and by reference to the accompanying drawings.

In the detailed description of the preferred embodiments of the invention presented below, reference is made to the accompanying drawings in which:
Fig. 1 is a schematic illustrating an embodiment of the system made in accordance with the present invention;
Fig. 2 is a block diagram illustrating software architecture for use in the system made in accordance with the present invention; made in accordance with the present invention;
Fig. 3 is a logic flowchart of a process for users to input audio and image files and to select criterion/criteria for use of images, audio and creative effects in the multimedia show made in accordance with the present invention;
Fig 4 is a continuation of the logic flowchart in Fig. 3, assuming the user has selected audio criterion/criteria but not image criterion/criteria for the authoring of a multimedia show made in accordance with the present invention;
Fig. 5 is a continuation of the logic flowchart in Fig. 3, assuming the user has selected image criterion/criteria but not audio criterion/criteria for the authoring of a multimedia show made in accordance with the present invention;
Fig. 6 is a continuation of the logic flowchart in Fig. 3, assuming the user has selected both audio use criterion/criteria and image use criterion/criteria for the authoring of a multimedia show made in accordance with the present invention; and
Fig. 7 is a continuation of the logic flowcharts in Figs. 4, 5 and 6, illustrating the automatic association of a collection of images with selected audio to create a multimedia show and the options for use of the multimedia show made in accordance with the present invention.

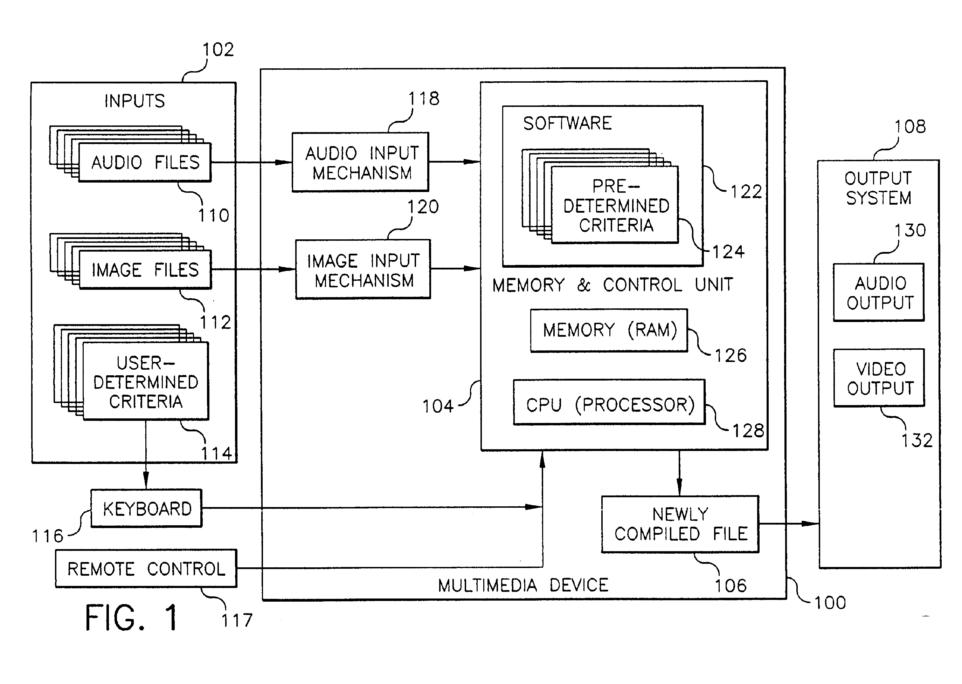

As referred to in Fig. 1, the Multimedia Device 100 comprises a memory and control unit 104, an audio input mechanism 118, and image input mechanism 120, keyboard 116 and a remote control 117 used for inputting instructions and data to the control unit 104. Inputs 102 in the form of audio files 110, image files 112 and user-determined criterion/criteria 114 are loaded into the memory and control unit 104 where they are stored in memory 126. The memory and control unit 104 applies software 122 to the audio files 110, image files 112, and user-determined criterion/criteria 114 to create a new multimedia file 106 which is outputted from the multimedia device 100 to the audio output 130 and video output 132.

The audio files 110 are digital files that can be originally accessed via CD-ROM, DVD, MP3, or over a network or the World Wide Web. They are input to the memory and control unit 104 via one or more audio input mechanisms 118. The audio input mechanisms 118 may be either ports to link to external audio system components, ports to link to networks or the Internet, or may be internal to the hardware of the memory and control unit 104 (i.e. an integrated CD player or memory card slot).

The image files 112 are still or moving image digital files that can be originally accessed via memory card, USB or Firewire ports, network access to images stored in a remote memory locale (i.e. networked PC or online storage such as the Ofoto site.) They are input to the memory and control unit 104 via one or more image input mechanisms 120. The image input mechanisms 120 may be either ports linked to external image storage locations or components (i.e. a digital camera, PC hard drive, or Internet access) or may be internal to the hardware of the memory and control unit 104 (i.e. an integrated CD-RW drive to read Picture CDs, a memory card slot, or receiver of wirelessly transmitted data.) The input mechanisms for audio and image files may in fact be one in the same.

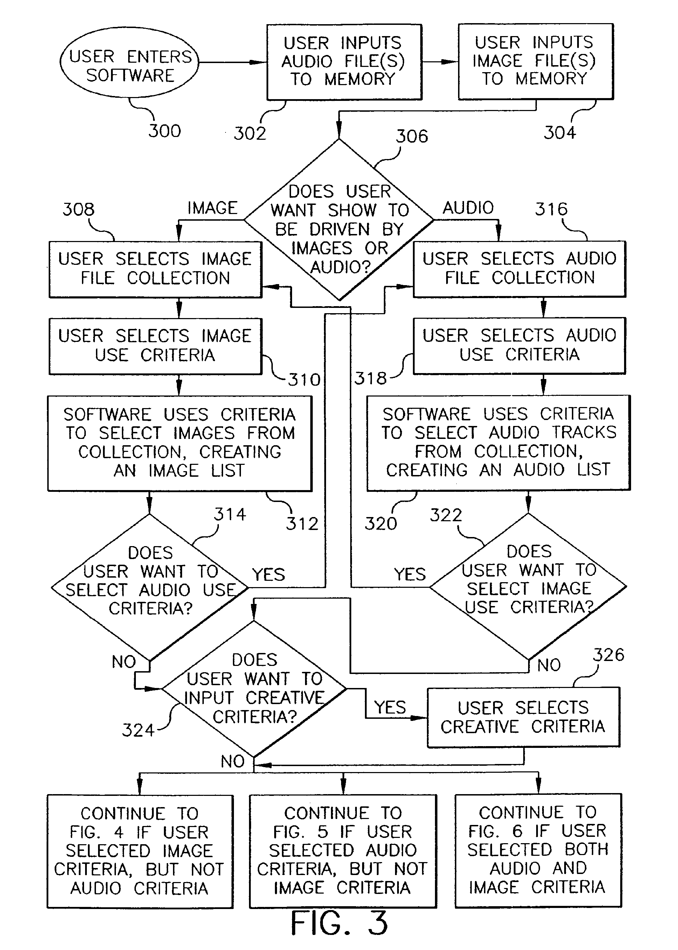

The selection of files for inclusion in the multimedia show may be based on either user-determined criterion/criteria 114 or predetermined criterion/criteria 122 that reside in the software 122. As described later herein, the user has the option to input specific criterion/criteria for the inclusion of audio, images and/ or creative effects in the multimedia show. These are the three types of "user-determined criterion/criteria" 114, and the user inputs this data to the memory and control unit 104 using a keyboard 116 or remote control 117 to select from options presented on-screen (as described in Fig. 3). Note that if the user opts *not* to input use criterion/criteria for any or all of these three types of inputs, the software will *automatically* select audio, image(s), and/or creative effects that are deemed appropriate according to the "predetermined criterion/criteria" 124 that reside in the software 122. The "predetermined criterion/criteria" comprise a mapping among image characteristics, audio characteristics, and creative effects that have been preprogrammed as appropriate complements to one another. This process is described later herein in Figs. 4, 5 and 6.

The multimedia device thus comprises one or more audio input mechanisms 118, one or more image input mechanisms 120 and the memory and control unit 104. The control unit 104 is provided with RAM memory 126, and the software 122. The memory 126 stores all of the inputs 102 and makes them available to the software 122 needed. The software 122 provides the capabilities described in Figs. 1 through 7, and includes a set of predetermined criterion/criteria 124 that guides the automatic authoring of multimedia shows in the absence of user-determined criterion/criteria to guide the authoring of the multimedia shows

Once the software 122 has authored a multimedia show, the memory and control unit 104 exports the newly compiled file 106 to an output system 108 comprising both audio output 130 and video output 132. This output system 108 can take the form, for example, of a television, an integrated home entertainment system, or an output system that is networked to the memory and control unit 104 such as a PC or wireless device with audio-visual capabilities. After the user views the show, she may choose to save it to memory 126, save it to a networked memory location, share the show via a network connection, or write it to a CD or DVD on a writer that is either networked or integrated into the memory and control unit 104.

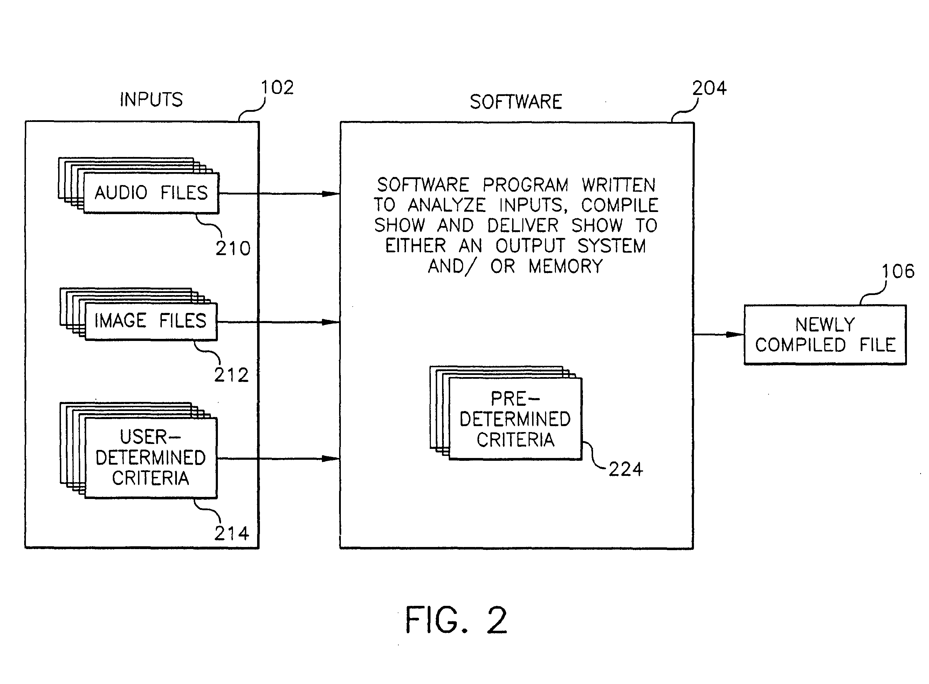

Fig. 2 is a block diagram illustrating the software architecture 204, which interacts with memory and control unit 104. The software 204 receives audio files 210, image files 212 and user-determined criterion/criteria 214. It then uses the predetermined criterion/criteria 224 to take the actions described in Figs. 3 through 7 to compile a new file comprised of a multimedia show. In the preferred embodiment the software 204 resides in memory and control unit 104 located in the multimedia device 100. In another embodiment the software 204 can reside in any type of memory and control unit, which may take the form of a hardware component of the home entertainment system, a handheld wireless device, or any networked CPU 128 or memory unit.

Referring to Fig. 3, the user begins use of the multimedia device 100 by entering the software at step 300, then loading one or a plurality of audio files at step 302 into the memory 126 and loading one or a plurality of image files at step 304 into memory 126. Loading of the files into the memory 126 may occur in a variety of ways, including but not limited to: wireless transmission from either capture device or another storage device, direct cable connection from either capture device or another storage device (USB, Fire Wire), a network that accesses an image collection stored elsewhere in the network (i.e. connection to hard drive, handheld, set top box, stereo components or music storage system), Internet access to images accessible at remote storage locations (online storage or access to remote network storage),memory card input directly to Multimedia Device 100 , direct input of CD into Multimedia Device 100, or direct input of DVD into Multimedia Device 100. These files may remain in memory 126 indefinitely, so that the user does not have to load new files each time she wants to author a multimedia show and can instead author shows based on files already in the memory 126.

The user then responds to a software prompt at step 306 asking whether she wants to prioritize images or audio in the multimedia show.

If the user chooses to prioritize images over audio, she then indicates a collection of image files at step 308 from among those stored in memory 126. For example, she could indicate that all images stored in memory 126 are part of the collection; she could select a series of specific individual images; she could indicate one or a plurality of image folders in memory 126.

The user then inputs user-determined image use criterion/criteria/criterion at step 310 that will be used by the software to select specific images for inclusion in the show. She indicates these user-determined criterion/criteria/criterion by selecting among on-screen options, inputting data using the keyboard 116 or remote control 117. Examples of user-determined image use criterion/criteria may include, but are not limited to: information about image metadata such as time of image capture, location of image capture, keywords in title or captioning of image, image author, inclusion of specific subjects (i.e. images that include a specific individual as determined by image recognition software) or event identification. The software then at step 312 applies the user-determined image use criterion selected by the user at step 310 to the selected image file collection at step 308 and creates an image list or folder of images that are now qualified for inclusion in the multimedia show.

An example of how the user determined criterion/criteria is applied to the collection may comprise using metadata information that may contain information about the dates or times or subjects of the images supplied in the collection. This information may be used to group the images in the show in a certain way, or present them in a particular order. This grouping can be achieved using an event clustering algorithm such as the one described in US Patent 6,351,556, to Loui and Pavie, which discloses a method for automatically comparing the content of images for classification by event. In addition, the image content can be analyzed using computer vision and image understanding algorithms to detect a main subject of interest, or to classify it into different scenes, e.g., birthday party, graduation, wedding, picnic, beach activities, etc.

When the qualified image list or folder at step 312 has been completely built, the user responds to a software prompt asking whether she wants to also select audio preferences at step 314.

If the user answers "yes" to this question at step 314 *or* answers "audio" to the initial question of image-driven vs. audio-driven at step 306, the user then indicates a collection of audio files at step 316 from among those stored in memory 126. For example, she could indicate that all audio files in memory are part of the collection; she could select a series of specific individual audio files; she could indicate one or a plurality of audio folders in memory 126. The user then selects audio use criterion at step 318, which may include but is not limited to information about audio metadata such as artist, genre, rhythm type, track duration, musical instrument inclusion, copyright date, date of loading the audio track into memory, or ownership of music (in the case that multiple users use the same Multimedia Device, the system can track which user "owns" which tracks in memory 126).

The software then applies the user-determined audio use criterion 318 to the selected audio file collection at step 316 and creates an audio list or folder of images at step 320 that are now qualified for inclusion in the multimedia show. In order to apply the user-determined criterion at step 318 by analyzing the digital audio file and/or associated meta data, for example, beat identification may be required. Identification of the music beat can be accomplished using the method disclosed in U.S. 4,594,930, titled "Apparatus for Synchronizing Playback Rates of Music Sources," by Murakami, which discloses " a discriminating circuit operative in response to the music signal to produce a beat signal representative of extracted beats."

When this has been completed, the user responds to a software prompt asking whether she wants to also select image preferences at step 322. If the user answers "yes" she moves to the beginning of the image preference process at step 308 and progresses through it.

If the user answers "no" to the option to input user-determined criterion for image use, either because she already has done so or because she desires to select only audio use preferences, the user responds to a software prompt asking if she wants to input creative preferences at step 324. If she indicates "yes," the software prompts the user to input the criterion for creative treatments in the multimedia show at step 326. This may take the form of the user selecting from among a plurality of creative templates that provide a combination of creative effects that fit a mood or theme such as described in EPO pending patent application entitled SOFTWARE AND SYSTEM FOR CUSTOMIZING A PRESENTATION OF DIGITAL IMAGES, of Joseph A. Manico, John Kenton McBride, Dale Frederick McIntyre, and Alexander C. Loui, EPO 03076844.4, filed June 13, 2003 which is hereby incorporated in its entirety by reference. (A creative template is a predetermined set of creative elements that may include, but is not limited to: a background, font style, style of transitioning from one image to the next and image filters. Examples of a "creative template" include themes such as "Beach Vacation," "Christmas," or "Wedding" or moods such as "Romantic," "Nostalgic," or "Edgy.") Alternately, instead of choosing among creative templates, the user might input the user-determined criterion for creative effects by selecting among options for specific elements of the creative treatment-- for example selecting among ten options for image transitions, then among ten options for backgrounds, then ten options for on-screen fonts.

If the user answers "no" to the software's query whether the user wants to input user-determined criterion for creative effects, creative preferences at step 324, the software advances to prepare the content for the multimedia show compilation, as described in Fig. 4, 5 or 6.

Now referring to Fig. 4, when user-determined criterion have been input for audio use criterion/criteria, but *not* for image use criterion/criteria. In this case, at step 400 the software will select at random one of the audio tracks from the selected audio file list from step 320 in Fig. 3. The software then analyzes said audio track at step 402. This analysis may include but is not limited to information about audio metadata such as artist, genre, rhythm type, track duration, musical instrument inclusion, copyright date, date of loading the audio track into memory 126, or the owner of the audio track.

At step 404, the software then uses the analysis of the audio track from step 402 to select a predetermined criterion/criteria from among a plurality of predetermined criterion/criteria that are preprogrammed in the software 122. The selected predetermined criterion/criteria will guide the software to identify images that "fit" with the metadata and content characteristics of said audio track. (As previously discussed, "predetermined criterion/criteria" are stored in the software 124 and comprise a mapping of image characteristics to audio characteristics that have been preprogrammed as appropriate complements to one another.)

For example, if the audio analysis output at step 402 indicates that the audio track is a techno genre, fast beat, 90 second duration track owned by user A, the predetermined image criterion/criteria may include: image ownership by user A, image transitions to occur "with the beat" (i.e. every two seconds) which thus dictates the number of images that should be selected from the qualified image list step 312 of Fig. 3, (i.e. forty-five images are needed in order to transition every 2 seconds for the duration of the 90 second audio track), images that involve one or more faces or are titled, captioned or organized in a folder that includes the keyword "party."

As another example, if the audio analysis indicates that the track includes the use of steel drum instruments, the predetermined image criterion/criteria may be for images in any folder that includes images with a beach. Data on the image content, such as a beach, party, vacation, etc. may be determined using event clustering methods as described in US 6,351,556 and/or image content parsing methods as described in US 6,147,742.

Once the software has determined the predetermined criterion/criteria that are appropriate to the audio track at step 404, the software identifies images on the qualified image list step 312 of Fig. 3 that fit said predetermined criterion/criteria at step 406. The software then creates a folder or list containing all the images that meet said predetermined criterion/criteria, with the files listed in chronological order at step 408.

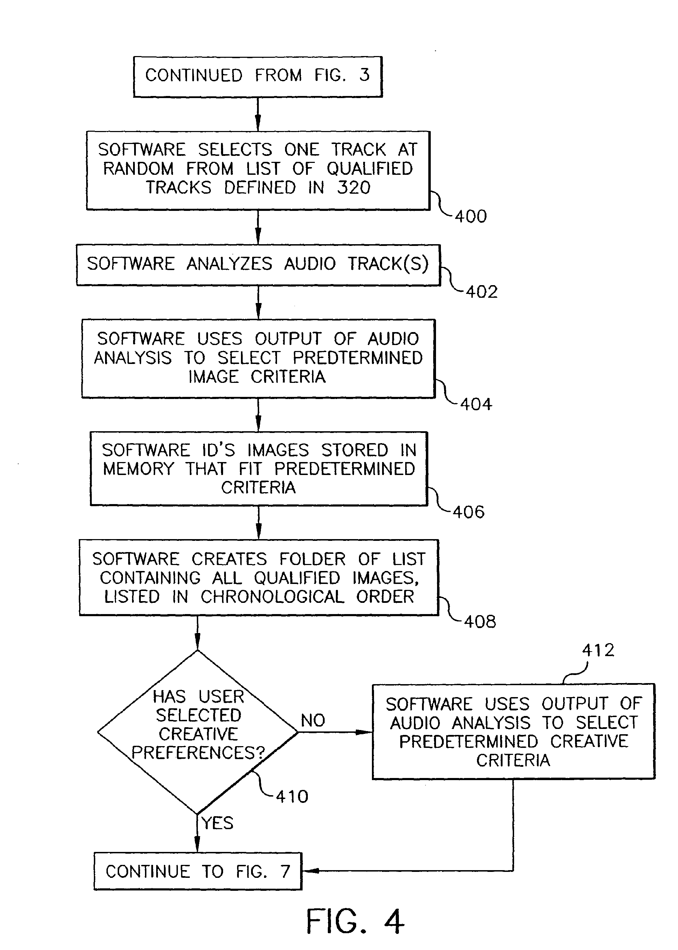

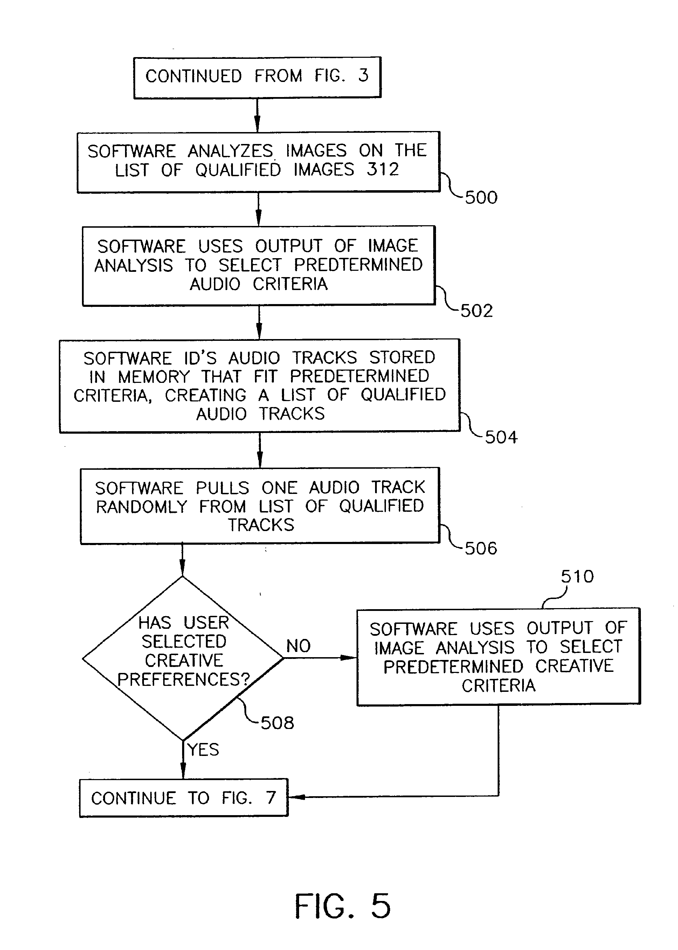

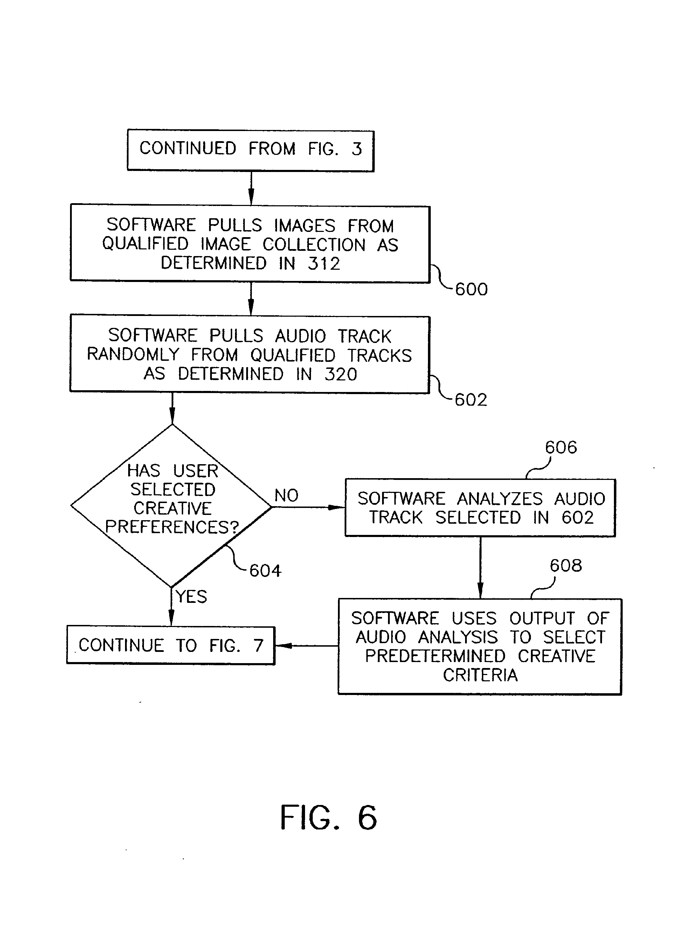

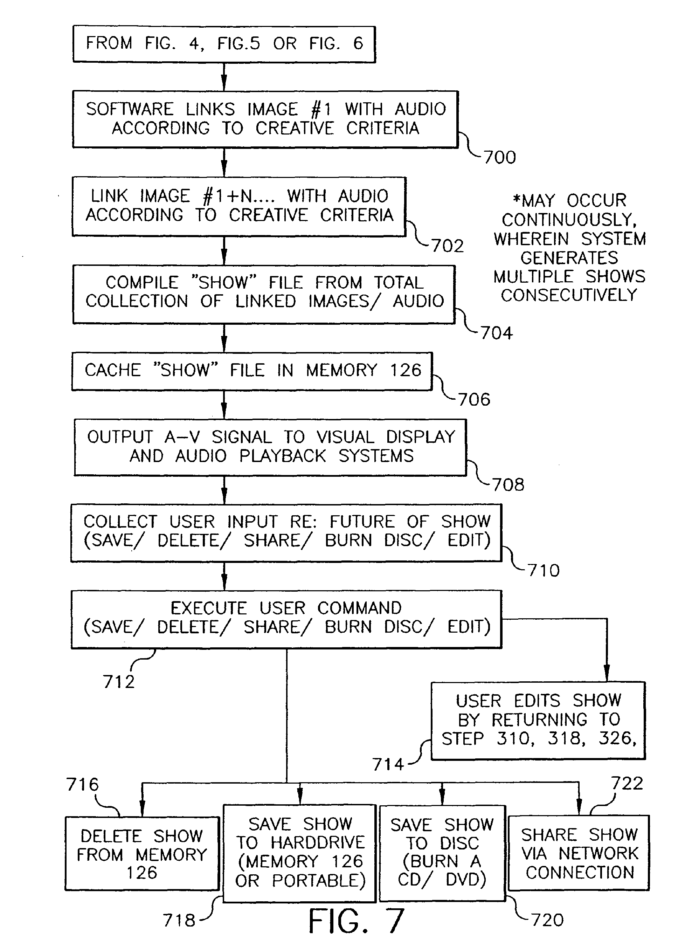

At step 410, the software now determines whether the user has previously input user-determined creative criterion/criteria during step 326 of Fig. 3. If "yes," the software progresses directly to the logic flowchart depicted in Fig. 7. If not, the software uses the output of the audio analysis to select among predetermined creative criterion/criteria at step 412. For example, if the audio is the techno genre track previously mentioned, the predetermined creative criterion/criteria stored in the software 124 may include specific distortion image filters, spinning special effects and transitions, and modernistic backgrounds. If the audio is the steel drum band track previously mentioned, the predetermined creative criterion/criteria may include faded transitions, a background that depicts waves and water, and/ or on-screen fonts that look like casual handwriting.

Once the software has collected criterion/criteria for audio, image and creative treatments based on either user-determined criterion/criteria or predetermined criterion/criteria, it begins to collate the files to compile the multimedia show, thus progressing to the continuation of the logic flowchart referred to in Fig. 7.

Now referring to Fig. 7, the software links the first image in the image list (as previously determined based on either user preference at step 312 in Fig. 3 or predetermined criterion/criteria at step 408 in Fig. 4) to the selected audio track (as previously determined based on either user preference step 400 in Fig. 4 or predetermined criterion/criteria step 506 in Fig. 5) using the creative criterion/criteria (as previously determined based on either user preference step 326 in Fig. 3 or predetermined criterion/criteria steps 412/ 510/ 608) at step 700. EPO pending patent application entitled SYNCHRONIZATION OF MUSIC AND IMAGES IN A CAMERA WITH AUDIO CAPABILITIES, of John Randall Fredlund, John C. Neel, Steven M. Bryant, EPO Serial No. 03076844.4, filed July 25, 2002, which is hereby incorporated in its entirety by reference which describes a relevant method for the automatic synchronization of sound to images (using beat, etc.).

The software then links the second image on said image list to said audio using said creative criterion/criteria at step 702. This process repeats until the first of two events occurs: either the qualified image collection from step 312 in fig. 3 is exhausted or the audio selected in step 400 or 506 or 602 finishes. The software then compiles the multimedia show from the total collection of linked images and audio at step 704 and caches the show file in memory 126 at step 706.

The memory and control unit 104 then outputs an audio-visual signal to the visual display 132 and audio playback 130 systems so that the user can experience the multimedia show at step 708. During playback, the user can edit the show in realtime using the remote control 117 to indicate, for example, that the image display duration should be longer or shorter or that a specific image should be deleted from the show.

While the show plays on the output system, the software may automatically begin to author a second show comprised of the images on the qualified image list 312 set to another of the audio tracks on the qualified audio list 320. This process continues until either the qualified image list 312 or the qualified audio list 320 is exhausted.

When the show has been fully played, the software collects user input regarding the future of the show at step 710. The software then executes the user command at step 712, which may include deleting the show from memory 126 at step 716, saving the show to a hard drive (either the memory in the unit 126 or an external memory source) at step 718, saving the show to a disc (possibly burning a CD or DVD on either a drive integrated into the memory and control unit 100 or accessed externally via a network) at step 720, or sharing the show with others via a network connection at step 722. The user can also choose to edit the show at step 714 by returning to choose new audio use criterion/criteria step 318 Fig. 3, image use criterion/criteria step 310 Fig. 3, or creative criterion/criteria step 326 Fig. 3. A method for *creative template-based* multimedia authoring systems and software where an initial multimedia presentation may be easily edited or otherwise modified by a user to create an improved presentation is described in EPO pending patent application entitled SOFTWARE AND SYSTEM FOR CUSTOMIZING A PRESENTATION OF DIGITAL IMAGES, of Joseph A. Manico, John Kenton McBride, Dale Frederick McIntyre, and Alexander C. Loui, EPO No. 03076844.4, filed June 13, 2003 which is hereby incorporated in its entirety by reference..

Instead of the logic flow as referenced in Fig. 4 for the primary embodiment, the logic flow of Fig. 5 may be substituted. Fig. 5 refers to the situation where the user has input user-determined criterion/criteria for image use, but not audio use.

The software 204 at step 500 analyzes the images on the qualified image list as previously determined at step 312 to determine a dominant pattern in the data. This analysis may include but is not limited to event clustering, image content analysis, and metadata identification and analysis such as previously discussed. For example, the software 204 analysis of the qualified image previously obtained at step 312 may find that all of the images were captured by user B, that most of the images involve landscape shots, and that the capture location of the majority of the images lies in France.

The software 204 then uses the output of the image analysis to select predetermined audio criterion/criteria at step 502. In the example described, the predetermined criterion/criteria may be that the audio track is in user B's audio collection and that the title is in French or includes the keyword "Paris." Or, it may be that the dominance of landscape images links to a predetermined criterion/criteria for an audio track of the classical genre.

Once the predetermined criterion/criteria have been identified at step 502, the software identifies any audio tracks stored in memory 126 that fit the predetermined criterion/criteria and generates a list of qualified audio tracks at step 504. At step 506 the software then pulls one audio track randomly from the list of qualified tracks previously generated at step 504.

At step 508, the software now determines whether the user has previously input user-determined creative criterion/criteria during step 326 t. If not, the software 204 uses the output of the audio analysis to select among predetermined creative criterion/criteria at step 510. For example, if the audio is the track with "Paris" in the title as previously mentioned and has a slow rhythm, the predetermined creative criterion/criteria may include simple transitions, a transition from one image to the next on only alternate beats, and backgrounds that incorporate images from France.

Once the software has collected or assigned criterion/criteria for audio, image and creative treatments, it begins to collate the files to compile the multimedia show, thus progressing to the continuation at step 700 of the logic flowchart in Fig. 7 described above.

Instead of the logic flow as referenced in Fig. 4 for the primary embodiment, the logic flow of Fig. 6 may be substituted. In this case, the user has selected both image use criterion/criteria and audio use criterion/criteria.

At step 600 the software pulls images from the qualified image list as previously determined i, and then at step 602 the software pulls an audio track randomly from the list of qualified tracks as previously determined at step 320.

Then at step 604, the software 204 determines whether the user has previously input user-determined creative criterion/criteria during step 326. If not, the software 204 analyzes the selected audio track at step 606 in the manner described relative to Fig. 4, and uses the output of the audio analysis to select among predetermined creative criterion/criteria at step 608 in the manner described earlier relative to Fig. 4.

Once the software 204 has collected or assigned creative criterion/criteria for the user-determined audio and image lists, it begins to collate the files to compile the multimedia show, thus progressing to the continuation of the logic flowchart as previously described in Fig. 7.

## Claims

1. A method for automatically associating images with audio for presentation in a multimedia show, comprising the steps of:
a. providing a collection of digital still images;
b. providing a collection of audio files;
c. selecting a criterion for the automatic selection of images from said collections of digital still images; and
d. automatically analyzing said audio files for selecting audio files to be presented with said selected digital images in said multimedia show

2. A method according to claim 1 wherein said automatic analyzing is based one or more of the following:
such as artist;
genre;
rhythm;
track duration;
musical instrument inclusion;
copyright date;
date of loading the audio track into memory;
or ownership of music; or
beat.

3. A method according to claim 1 further comprising the step of:
providing user selective creative criterion for inclusion in the multimedia show prior to the automatically analyzing of said audio files.

4. A method for the automatically associating a of images with audio for presentation in a multimedia show, comprising the steps of:
a. providing a collection of digital still images;
b. providing a collection of audio files;
c. selecting a criterion for the automatic selection of audio files from said collections of audio files; and
d. automatically analyzing said digital image for selecting digital images to be presented with said selected audio files in a show

5. A method according to claim 4 wherein said automatic analyzing is based one or more of the following:
time of image capture;
date of image capture
location of image capture;
keywords in title or captioning of image;
image author;
inclusion of specific subjects;
image recognition software; or
event identification.

6. A method according to claim 4 further comprising the step of:
providing user selective creative criteria for inclusion in the multimedia show prior to the automatically analyzing of said images.

7. A method according to claim 6 wherein said creative criterion comprises one or more of the following:
particular scene,
Beach Vacation;
Holiday;
Event;
Date;
Mood as Romantic, Nostalgic, or Edgy.

8. A method for automatically associating a collection of images with selected audio, comprising the steps of:
a. providing a collection of digital still images;
b. providing a collection of audio files;
c. selecting a first criterion for the automatic selection of audio files from said collections of audio files;
d. selecting a second criterion for the automatic selection of digital images from said collections of digital still images; and
e. automatically analyzing said selected digital images and said selected audio files for creating a presentation of said selected digital images and selected audio files in said multimedia show in accordance with said first and second criteria.

9. A method according to claim 8 wherein said automatic analyzing is based one or more of the following:
time of image capture;
date of image capture
location of image capture;
keywords in title or captioning of image;
image author;
inclusion of specific subjects;
image recognition software; or
event identification.
such as artist;
genre;
rhythm;
track duration;
musical instrument inclusion;
copyright date;
date of loading the audio track into memory;
or ownership of music; or
beat.

10. A method according to claim 8 further comprising the step of:
providing user selective creative criteria for inclusion in the multimedia show prior to the automatically analyzing of said audio files and images.
